# FASCICULE DE BREVET EUROPEEN

(11) **EP 2 307 237 B1**
(45) Date de publication et mention de la délivrance du brevet: **13.01.2016**
(21) Numéro de dépôt: 09784256.1
(22) Date de dépôt: 08.07.2009
(51) Int. Cl.: B60P 3/077, B60P 3/075

(54) **CALE DEPLAÇABLE LE LONG D'UN PROFILE ET RABATTABLE PAR PIVOTEMENT CONTRE CELUI-CI POUR CHAQUE PNEU D'UN VEHICULE ROUTIER PORTE PAR UNE UNITE DE TRANSPORT**
ENTLANG EINEM TEILABSCHNITT VERSCHIEBBARER UNTERLEGTEIL, DER DURCH SCHWENKEN GEGEN DIESEN TEILABSCHNITT UMGEKLAPPT WERDEN KANN, FÜR JEDEN REIFEN EINES VON EINER TRANSPORTEINHEIT BEFÖRDERTEN STRASSENFAHRZEUGS
CHOCK THAT CAN BE MOVED ALONG A SECTION PIECE AND FOLDED BY PIVOTING AGAINST THIS SECTION PIECE FOR EACH TYRE OF A ROAD-GOING VEHICLE CARRIED BY A TRANSPORTER UNIT

(30) Priorité: 17.07.2008 FR 0804072
(43) Date de publication de la demande: 13.04.2011
(73) Titulaire: Lohr Industrie, 67980 Hangenbieten (FR)
(72) Inventeur: ANDRE, Jean-Luc, F-67120 Molsheim (FR); BRUNEAU, Michel, F-67560 Rosheim (FR)
(74) Mandataire: Merckling, Norbert
(86) Numéro de dépôt international: PCT/FR2009/000847
(87) Numéro de publication internationale: WO 2010/007245

(56) Documents cités:
- DE-B- 1 275 572
- DE-U1- 7 810 867
- DE-U1- 9 204 466
- FR-A- 2 692 539
- FR-A- 2 765 844

## Description

La présente invention se rapporte à une cale déplaçable et escamotable pour un véhicule routier sur une structure porteuse assurant son transport. La structure porteuse de transport peut être un véhicule quelconque : routier, ferroviaire ou maritime.

Dans le domaine des cales déplaçables pour structures porteuses d'un véhicule routier, on connaît de nombreux modèles présentant chacun un intérêt.

La présente invention vise les cales du type déplaçable linéairement le long d'un profilé de bordure et se rangeant par pivotement de rabattement contre et le long de cette bordure alors que leur position de calage est sensiblement perpendiculaire à ladite bordure.

Elle vise aussi une cale efficace dont la hauteur de calage après la mise en place procure une immobilisation de sécurité car non franchissable.

On connaît la cale décrite dans le brevet antérieur du dépôt FR n° 2656858.

La cale décrite dans cette publication de brevet, comporte un bras monté pivotant sur un axe de pivotement porté par une embase mobile en translation le long d'une bordure rectiligne d'une structure porteuse du véhicule à caler. Cette embase se trouve bloquée sur la bordure rectiligne par une force de pression provenant d'une pièce de blocage, par exemple par appui de coincement d'un patin sur la face adjacente de la bordure. L'extrémité arrière du bras pivotant est conformée pour commander en poussée à partir de son mouvement angulaire la pièce de blocage en pression sur la face interne de la bordure rectiligne pour l'immobilisation de l'embase sur celui-ci et pour son verrouillage angulaire. La pièce de blocage est mobile en translation entre une position haute dans laquelle le mouvement angulaire du bras à l'intérieur d'une zone angulaire prédéterminée permet une immobilisation conjointe du bras en pivotement et de son embase en translation sur la bordure rectiligne et une position basse dans laquelle la pièce de blocage échappe à l'action de la commande en poussée par l'extrémité arrière du bras.

Or, il se trouve que dans certains cas l'effort de freinage est tel que les pneus d'un même train de roues passent au-dessus des cales d'immobilisation en raison de la différence de niveau trop faible entre le sol et la cale.

Ce franchissement de la cale représente un danger extrême pour le véhicule transporté qui peut télescoper le véhicule précédent ou percuter une structure fixe du véhicule transporteur et occasionner ainsi divers dommages pouvant être graves.

On pourrait bien entendu, penser relever le niveau du bras pivotant de la cale selon le brevet FR n° 2656858 du déposant.

Cependant, on ne peut réaliser qu'un relèvement de faible amplitude en raison du niveau toujours plus bas des bords inférieurs des caisses des carrosseries des voitures actuelles, mais aussi de certaines structures basses des carrosseries et suspensions, par exemple des capots de protection ou des triangles de suspension.

Pour éviter une interférence avec ces structures lors des mouvements de rabattement de la cale, ce relèvement s'avère assez limité, en tout cas insuffisant pour garantir le non-franchissement lors d'accélérations mais surtout de décélérations fortes.

On connaît à cet effet la cale selon le brevet français n° 2765844 au nom de la société FRANCE MANCHE.

Selon cette invention le sabot de la cale en contact avec l'avant du pneu présente une partie relevable sous l'effet de la poussée de la roue dont le pneu arrive en contact avec le sabot. Cette partie est montée en rappel élastique de retour vers le bas en position de repos par un ressort de torsion.

Si cette cale assure une meilleure immobilisation par un contact à une hauteur supérieure, on ne peut garantir une immobilisation totale car le desserrement est toujours possible par les secousses au niveau de son mécanisme de rabattement et de maintien en position. Celui-ci ne présente en effet ni verrouillage ni blocage de sécurité.

En effet, les vibrations et les secousses engendrent des mouvements du bras de la cale qui se répercutent sur les moyens d'immobilisation par coincement, ce qui conduit à un relâchement de l'effort de coincement et à de petits déplacements d'éloignement rendant le calage moins sûr.

Ce relâchement peut s'aggraver par les secousses et les vibrations jusqu'à rendre le calage inopérant.

Il convient de relever que les moyens de calage relevables ne sont prévus qu'à l'avant du pneu et que les moyens de calage prévus à l'arrière sont particulièrement faciles à franchir en cas de secousses ou de vibrations.

Cette réalisation antérieure prévoit en outre des moyens de calage disposés de façon discrète, et non déplaçable, le long du plateau et elle nécessite l'installation de nombreux vérins.

Tous les inconvénients majeurs décrits ci-dessus ont conduit les inventeurs à imaginer une cale améliorée objet de la présente invention. position de repos par un ressort de torsion.

Si cette cale assure une meilleure immobilisation par un contact à une hauteur supérieure, on ne peut garantir une immobilisation totale car le desserrement est toujours possible par les secousses au niveau de son mécanisme de rabattement et de maintien en position. Celui-ci ne présente en effet ni verrouillage ni blocage de sécurité.

En effet, les vibrations et les secousses engendrent des mouvements du bras de la cale qui se répercutent sur les moyens d'immobilisation par coincement, ce qui conduit à un relâchement de l'effort de coincement et à de petits déplacements d'éloignement rendant le calage moins sûr.

Ce relâchement peut s'aggraver par les secousses et les vibrations jusqu'à rendre le calage inopérant.

Il convient de relever que les moyens de calage relevables ne sont prévus qu'à l'avant du pneu que les moyens de calage prévus à l'arrière sont particulièrement faciles à franchir en cas de secousses ou de vibrations.

Cette réalisation antérieure prévoit en outre des moyens de calage disposés de façon discrète, et non déplaçable, le long du plateau et elle nécessite l'installation de nombreux vérins.

On connaît également la cale décrite dans le brevet antérieur du dépôt FR n° 2692539 qui montre le préambule de la revendication 1.

Il s'agit d'un dispositif de calage de véhicule comportant un bras profilé pivotant sur lequel est monté un sabot récepteur de calage. Ce dispositif de calage est monté coulissant sur un ou plusieurs rails de guidage profilés disposé sur l'aire de stockage des véhicules.

Tous les inconvénients majeurs décrits ci-dessus ont conduit les inventeurs à imaginer une cale améliorée objet de la présente invention.

L'invention a pour but de proposer une nouvelle cale du type cité au début, présentant toutes les garanties de non franchissement lorsqu'elle se trouve en place contre le pneu en même temps qu'un aspect essentiellement pratique pour l'opérateur et à calage permanent et efficace quelles que soient les vibrations et les secousses liées au transport.

A cet effet, la cale déplaçable selon

L'invention a pour but de proposer une nouvelle cale du type cité au début, présentant toutes les garanties de non franchissement lorsqu'elle se trouve en place contre le pneu en même temps qu'un aspect essentiellement pratique pour l'opérateur et à calage permanent et efficace quelles que soient les vibrations et les secousses liées au transport.

A cet effet, l'invention comporte une cale déplaçable selon la revendication 1.

La présente invention offre de nombreux avantages tels que ceux mentionnés ci-dessous :
- tout est commandé au pied par l'opérateur, en ouverture comme en fermeture
- l'ensemble est peu encombrant en hauteur,
- l'ensemble est imperdable, toujours lié à la structure porteuse,
- l'ensemble est standard, et symétrique, un seul modèle de cale pour caler l'un ou l'autre côté d'un pneu ou l'un ou l'autre côté du véhicule à transporter, pas de pièce droite ou gauche spécifique,
- la hauteur de sécurité anti-franchissement demandée est respectée et obtenue après passage du bras sous l'extrémité du véhicule,
- la cale se compose de moyens mécaniques simples pour réaliser l'immobilisation par arc-boutement,
- une contrainte permanente est assurée même lorsque le pneu arrive plus ou moins en pression contre la cale éliminant ainsi tout relâchement suite aux vibrations ou aux secousses,
- la sécurité pour l'opérateur est assurée,
- l'opération de calage est rapide et ergonomique.

D'autres caractéristiques et avantages de l'invention apparaîtront dans la description qui suit, donnée à titre d'exemple et accompagnée des dessins dans lesquels :
- la figure 1 est une vue en perspective d'une cale selon un premier mode de réalisation de l'invention montée déplaçable sur une bordure rectiligne d'une structure porteuse d'un véhicule transporteur, camion, wagon ou bateau et se trouvant en position de calage,
- la figure 2 est une vue en perspective d'une cale selon le premier mode de réalisation de l'invention en position escamotée rabattue le long de la bordure rectiligne de la structure porteuse,

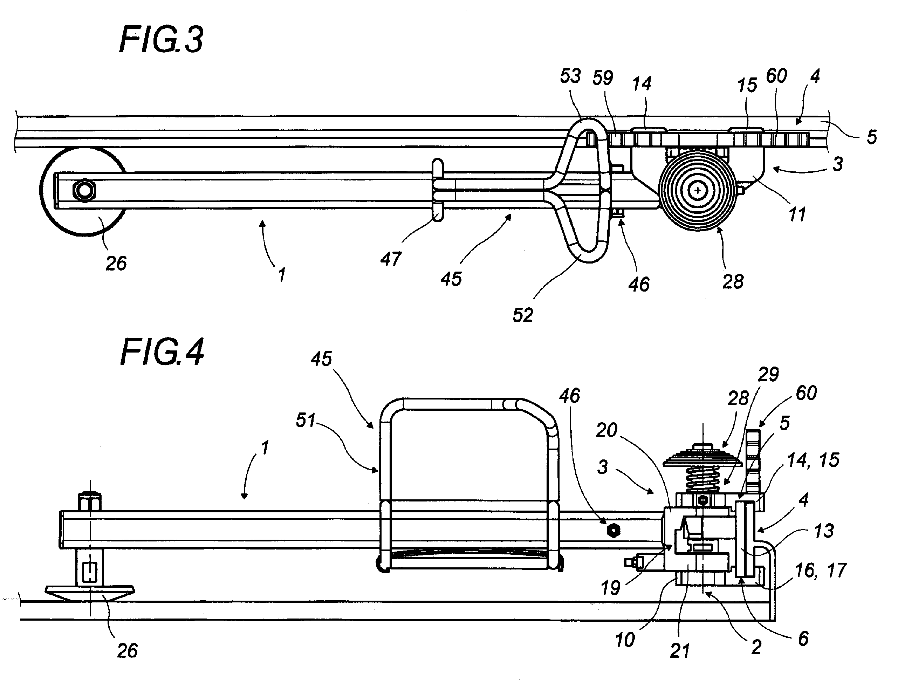

- la figure 3 est une vue de dessus de la cale selon l'invention correspondant à la figure 2,
- la figure 4 est une vue de profil de la cale selon l'invention correspondant à la figure 1,
- les figures 5 et 6 sont des vues en coupe respectivement dans la position verrouillée et dans la position déverrouillée de la partie pivot de la cale selon l'invention,
- les figures 7 et 8 sont des vues schématiques illustrant le fonctionnement du mécanisme de coincement dans deux positions caractéristiques du bras,
- les figures 9 à 11 sont des vues de profil de la cale selon le premier mode de réalisation de l'invention illustrant trois positions de la pièce de calage, avec pour les deux dernières une ligne courbe représentant une partie du contour du pneu :

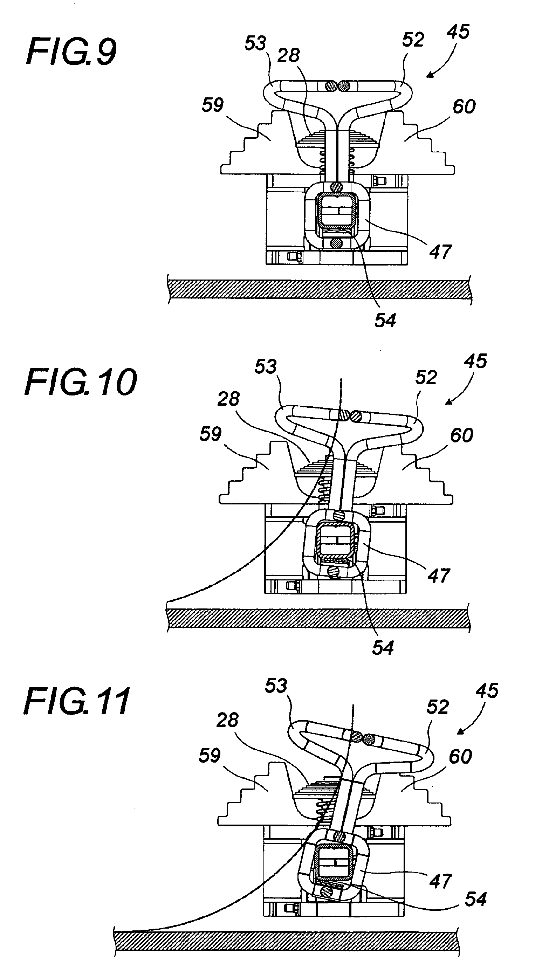

- figure 9: pièce de calage droite au repos,
- figure 10: pièce de calage en position intermédiaire,
- figure 11: pièce de calage basculée par la poussée du pneu,

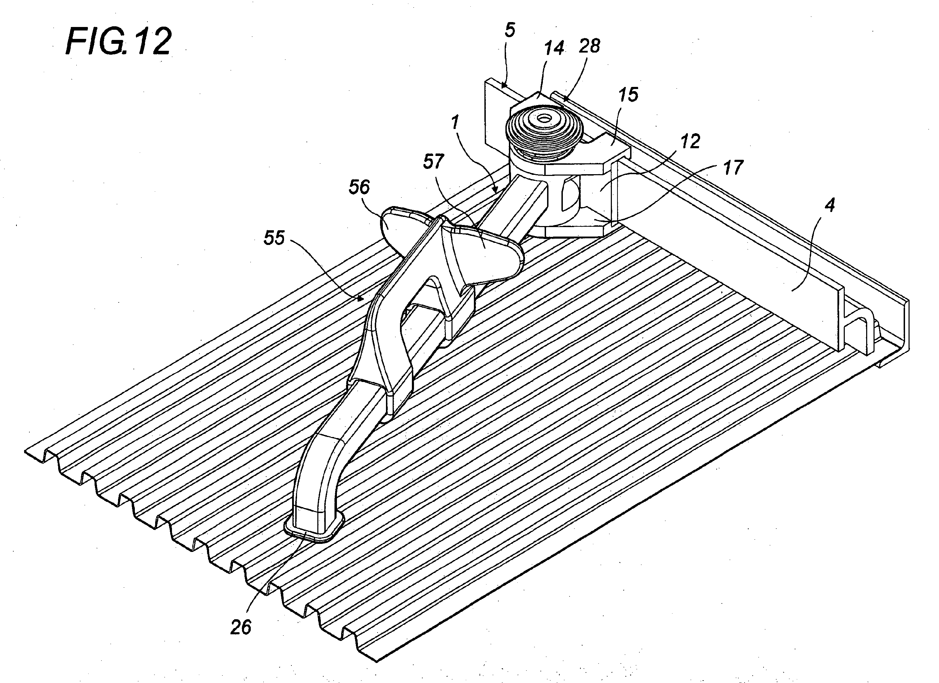

- la figure 12 est une vue en perspective de la cale selon l'invention dans un second mode de réalisation représentée légèrement en biais sur une bordure rectiligne d'une structure porteuse ,

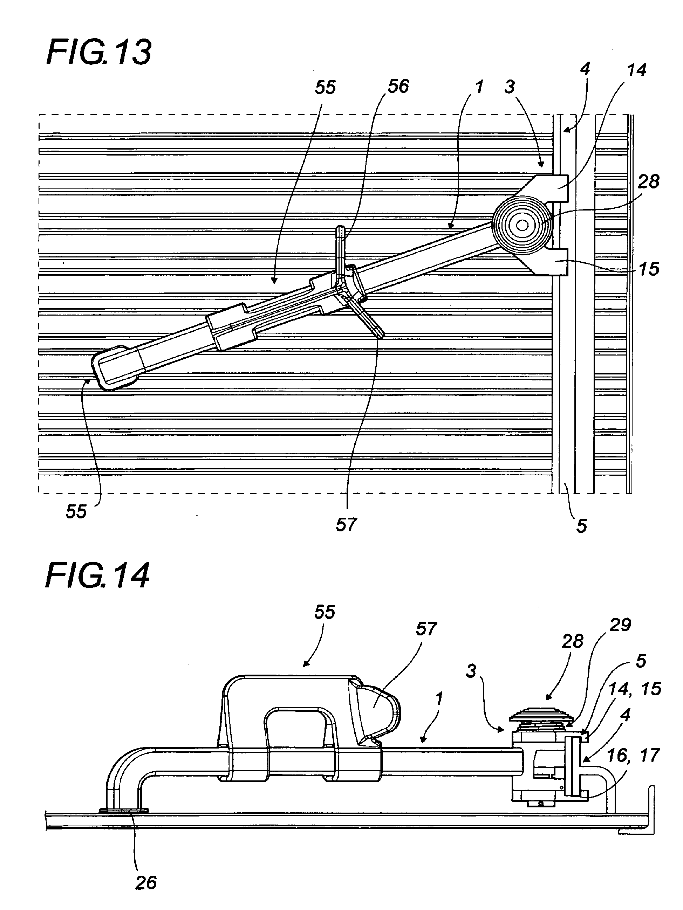

- la figure 13 est une vue de dessus de la cale selon l'invention correspondant à celle de la figure 12, et
- la figure 14 est une vue de profil de la cale selon l'invention correspondant à celle de la figure 12.

La cale déplaçable et rabattable selon l'invention se compose d'un bras pivotant 1 articulé à son extrémité arrière sur un axe de pivotement 2 porté par un bloc mécanique 3 formant un coulisseau, monté déplaçable par coulissement le long d'un support rectiligne ou profilé porteur 4 par exemple de bordure. Ce profilé est dans l'exemple représenté sur les figures du type fer plat à chants latéraux 5 et 6 et à grandes faces latérales 7 et 8 regardant respectivement vers l'extérieur et vers le plateau de réception du véhicule à transporter (non représenté).

Le bloc mécanique 3 formant un coulisseau, portant le bras pivotant 1, est immobilisable sur le support rectiligne 4 par l'action d'un mécanisme de verrouillage-déverrouillage 9 dans une position angulaire prédéterminée qui est la position de calage sensiblement perpendiculaire au profilé 4 de bordure ou légèrement en biais par rapport à ce profilé.

Le bloc mécanique 3 est formé d'une chape inférieure 10 et d'une chape supérieure 11 reliées entre elles en regard de la face interne 8 du profilé 4 par deux platines 12 et 13 présentant entre elles une pièce d'appui de blocage dont il sera question ci-après.

Les chapes 10 et 11 sont prolongées chacune vers le profilé 4 par deux pattes d'accrochage 14, 15 et 16, 17 délimitant chacune une gorge telle que 18 adaptée à la forme des chants du profilé 4 pour venir y prendre appui à coulissement, constituant ainsi un coulisseau se déplaçant en translation le long du profilé 4. L'embase ou le corps 3 est accroché sur le profilé 4 par ces pattes et s'y trouve maintenu stable en déplacement par l'engagement de chaque couple de gorges 18 sur chaque chant latéral, 5 ou 6, correspondant.

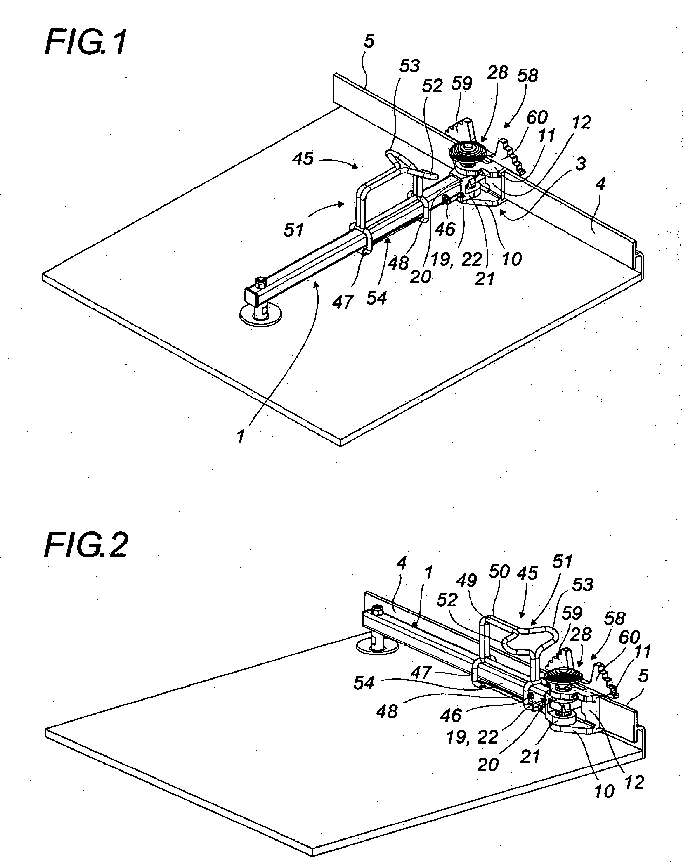

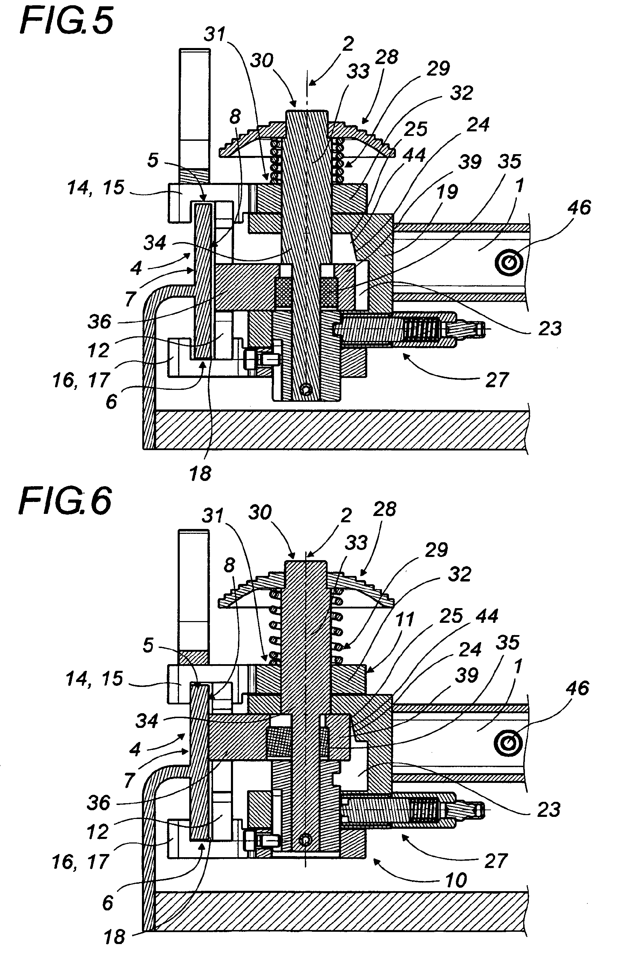

Les encoches dans ces pattes sont légèrement plus larges que l'épaisseur du profilé pour permettre le libre coulissement. Quand la cale est en position opérationnelle, (figures 1 et 6), ce jeu est rattrapé d'un coté, le coulisseau étant en appui par l'action de la pièce d'appui et de blocage.

On peut remarquer que l'ensemble vu de dessus est parfaitement symétrique donc pouvant fonctionner indifféremment dans un sens ou dans l'autre.

Le bras pivotant 1 est constitué, par exemple, d'un simple tronçon rectiligne tubulaire par exemple de section carrée. Son extrémité arrière est articulée au corps 3 par une fourche 19 formée de deux paliers 20 et 21 montés sur l'axe de pivotement 2 pour pivoter autour de celui-ci et soutenir mécaniquement le bras 1.

Les deux paliers 20 et 21 sont réunis mécaniquement entre eux au niveau de la jonction avec le bras pivotant 1 et forment une pièce d'extrémité 22 de profil transversal général en U couché. La partie en retrait de la face ouverte de cette pièce d'extrémité présente une conformation en cavité ouverte, suffisamment grande pour permettre le passage de la pièce d'appui blocage lors de la rotation de la cale, 23 suivie vers le haut par une rampe 24. Celle-ci est prolongée vers l'avant par un plan de poussée 25 convenablement orienté agissant sur la pièce de blocage dont il sera question ci-après (figures 5 et 6).

Sur l'extrémité opposée du bras pivotant est monté un pied, par exemple sous la forme d'un tronçon solidaire d'un patin d'appui 26 en contact avec le plan porteur du véhicule transporté permettant ainsi de soulager l'emprise mécanique du corps 3 sur le profilé 4 lors de la force d'appui de la roue.

Le bras pivotant 1 se déplace angulairement autour de l'axe de pivotement 2 qu'il utilise comme support par l'intermédiaire des ouvertures des paliers 20 et 21. Cet axe de pivotement 2 est rendu immobile en pivotement par l'intermédiaire d'un blocage quelconque, par exemple à l'aide d'une vis. Il reste mobile en translation, de haut en bas et inversement, perpendiculairement au bras 2 et à son plan de débattement angulaire sauf lors de l'enclenchement d'un dispositif de maintien 27 à ressort et piston le bloquant en position déverrouillée (figure 5) lorsque la tête de piston vient se loger dans la rainure alors en regard.

Ce dispositif est une aide à la mise en position.

L'axe de pivotement 2 est pourvu vers le haut d'une pièce terminale de forme générale en champignon constituant une surface d'appui destinée à recevoir une pression d'actionnement verticale par le pied de l'opérateur. Cette pièce terminale sera par conséquent appelée ci-après pédale 28.

L'axe de pivotement 2 est monté en rappel élastique axial vers le haut par un ressort de rappel 29 concentrique à l'axe de pivotement 2 situé par exemple entre la pédale 28 et la chape supérieure.

On peut voir sur les figures que l'axe de pivotement 2 est formé de deux parties distinctes : une pièce principale 30 présentant une partie d'appui 31 d'une pièce terminale 32 de plus faible diamètre qui porte une pièce d'armement 33 rapportée en extrémité.

La pièce d'armement 33, le ressort concentrique de rappel 29 de l'axe de pivotement 2 et un ressort d'armement décrit ci-après forment un dispositif d'armement-déclenchement 34 du verrouillage-blocage commandé par un ressort d'armement et l'axe de pivotement 2.

Une douille déplaçable et déformable 35, une pièce mobile d'appui et de blocage 36 constituent, avec l'extrémité arrière du bras 1 et l'axe de pivotement 2, le mécanisme de verrouillage-déverrouillage 9.

Cette pièce d'appui et de blocage 36 est mobile axialement de bas en haut et inversement avec l'axe de pivotement 2 qui la porte.

La pièce mobile d'appui et de blocage 36 comporte, à son extrémité avant, une paroi frontale 37 pourvue d'un garnissage, ou d'une structure ou présente un relief de blocage 38 contre la face interne 8 du profilé 4. Cette pièce d'appui de blocage comporte une paroi arrière 39 dont la partie supérieure est conformée de façon adaptée pour permettre, à partir du mouvement angulaire de blocage du bras, un mouvement transversal de la pièce 36 forçant en blocage de coincement la paroi frontale 37 contre la face interne 8 du profilé porteur 4.

Il s'agit plus particulièrement, en ce qui concerne la forme de la partie supérieure de la paroi arrière 39, d'un front de poussée composite 40 à deux biseaux symétriques 41 et 42 séparés par un méplat 43 venant en contact avec un front en plan incliné de poussée 44 constituant le plan de bordure de la cavité supérieure 24 dont le rôle est celui de rampe de dégagement à la paroi arrière 39 de la pièce mobile d'appui de blocage 36.

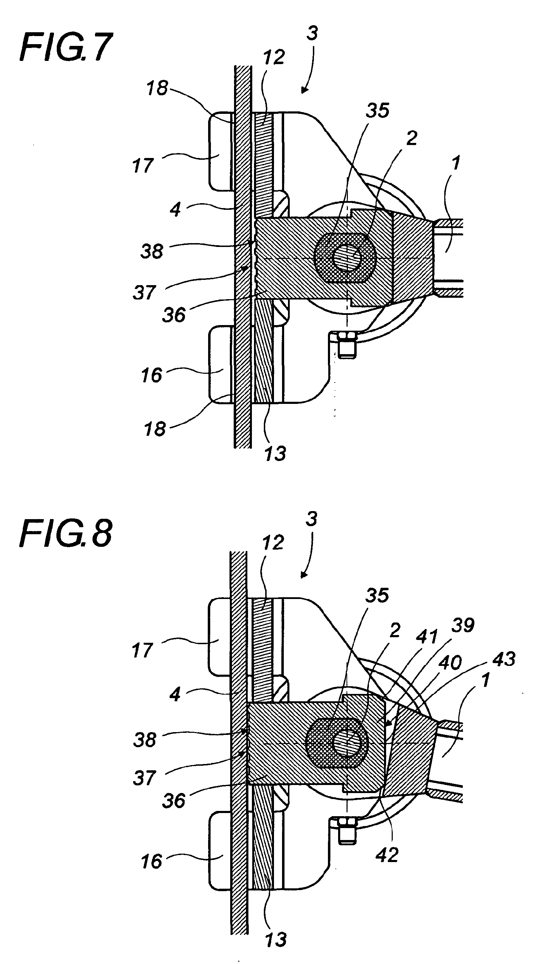

On distingue sur la figure 8 les surfaces symétriques en contact qui procurent deux positions de blocage symétriques par rapport à la position perpendiculaire du bras de la figure 7.

On remarque aussi sur la figure 8 la compression de la douille déformable 35.

De préférence, la pièce d'armement 33 présente, par exemple, dans un plan transversal une came en creux formée d'une succession de rainures ou de gorges, par exemple de trois gorges dans la surface latérale cylindrique de la pièce d'armement 33, dont les plans de fond sont, par exemple, perpendiculaires deux à deux.

Ces gorges adjacentes ne se rejoignent pas et laissent chacune entre elles des portions de raccordement de surface latérale cylindrique en coin sortant arrondi plus ou moins étendu en fonction de leur disposition, de leur longueur et profondeur.

Ces gorges sont utilisées pour le logement temporaire d'une pièce d'encliquetage ou d'une partie de celle-ci par exemple un ressort d'armement par son corps ou son extrémité qui affecte la forme d'une tige ou d'une lame.

La tige ou la lame est disposée au droit des gorges ou rainures de la came.

Elle tourne avec le palier inférieur 21 autour de l'axe de pivotement 2 et, selon le parcours angulaire, reste en fond de gorge ou sort de celle-ci pour se trouver en appui sur la surface latérale.

Elle présente un effet de ressort lui conférant une force de rappel élastique vers le fond des gorges ou des rainures.

Cette tige ou lame bloque la remontée de l'axe 2 lorsque celle-ci se trouve enfoncée et logée dans l'une ou l'autre des gorges ou rainures. Elle libère cet axe en déplacement vers le haut lorsqu'elle sort de ladite gorge par son soulèvement consécutif au passage du coin arrondi adjacent.

Lorsque le bras 1 pivote dans une zone angulaire au-delà d'une déviation angulaire prédéterminée, fonction du nombre, de la longueur et de la disposition des gorges ou rainures, la tige du ressort, après le passage du coin adjacent, sort de la gorge, libérant mécaniquement l'axe de pivotement dans sa montée, sous l'effet du ressort de rappel, en vue du blocage de la cale sur son profilé porteur, par un mouvement angulaire supplémentaire du bras.

On remarque ici la présence de trois gorges qui procurent deux positions symétriques de réarmement et corrélativement de blocage par rapport au plan perpendiculaire médian.

Afin de mieux faire comprendre les moyens décrits et leur fonction, on décrira ci-après les différentes phases de fonctionnement.

Le bras se trouve à l'état initial en position rabattue contre l'élément rectiligne porteur laissant la voie libre aux véhicules portés par le plan de chargement.

En position escamotée rabattue, le bras se trouve en position verrouillée et bloquée. Dans cette position, le bras est bloqué en pivotement par un des flancs latéraux, suivant le sens du rangement de la cale, de la pièce d'appui blocage contre les rampes de la partie supérieure du U du bras pivotant. Après enfoncement de la pédale par l'opérateur, le bras est déverrouillé.

Ceci procure une première sécurité en position de repos.

Le bras tournera librement après libération par la pédale et mise en prise du ressort d'armement dans une des gorges. Dans ce cas, la pièce d'appui et de blocage se trouve au niveau de la cavité prévue à cet effet dans la partie basse du U du bras pivotant.

Le bras est alors pivoté dans le sens convenable de droite à gauche ou de gauche à droite.

A partir d'une certaine déviation angulaire, le pivotement du bras va faire sortir le ressort d'armement de la gorge dans laquelle il se trouve par la présentation du coin inter-gorges adjacent et passage du ressort le long de celui-ci. L'axe de pivotement 2 n'est plus maintenu dans sa position verticale basse de déverrouillage. Ceci résulte de la conformation en succession de gorges de l'axe au droit du ressort à la manière d'une came en creux avec séparation par des coins angulaires arrondis. Le ressort d'armement dans son mouvement sort de la gorge et la surface latérale du cylindre constituant la pièce d'armement 33 rapportée sur le corps de l'axe de pivotement glisse le long du ressort sous l'effet de la remontée dudit axe de pivotement.

Le ressort de rappel de l'axe de pivotement ramène celui-ci automatiquement vers le haut avec la pièce de blocage 34 qui remonte vers les rampes de la partie supérieure du U du bras pivotant. A ce stade, la cale n'est pas encore immobilisée, la pièce d'appui et de blocage étant maintenue avec un léger jeu par rapport au profilé par l'action de sa bague de recentrage vers l'axe de pivotement, en matériau élastique. L'opérateur peut, en poussant avec son pied faire avancer l'ensemble vers le pneu du véhicule à caler. Ainsi, le contact mécanique entre le front plan de poussée 25 de l'extrémité arrière du bras et la paroi arrière biseautée de la pièce de blocage assure la poussée de celle-ci vers la face interne 8 du profilé tout en ramenant le coulisseau en traction sur languettes. Ainsi, le couple pièce d'appui de blocage-coulisseau, forme une pince qui serre le profilé porteur 4. Plus l'opérateur tape sur le coulisseau au niveau de l'appui antidérapant prévu à cet effet sur le coulisseau, le bras pivotant étant en appui sur le pneu, plus le serrage de cette pince est important.

La succession de ces actions mécaniques aboutissant au blocage par coincement nécessite une certaine amplitude de déviation angulaire. Cette déviation angulaire est aussi recherchée car ainsi le bras pivotant de calage fait un angle d'ouverture qui retient en latéral le véhicule sur sa structure porteuse.

Pour déverrouiller la cale, il suffit d'appuyer sur le champignon de la pédale 28 au sommet de l'axe de pivotement 2 pour libérer la pièce d'appui et de blocage 36 de son appui sur les rampes supérieures du U du bras pivotant. Ces rampes sont légèrement inclinées pour faciliter le dégagement de la pièce d'appui et de blocage. L'axe de la pièce d'appui et de blocage se trouve retenu au niveau de la cavité du U par la sortie du ressort d'armement. L'opérateur peut ainsi rabattre la cale avec le pied, le long du profilé. Par ce pivotement, la cale se réarme quand le ressort de réarmement se retrouve dans la zone cylindrique entre deux gorges du cylindre de réarmement.

Entre les deux positions respectives d'armement et de blocage, la succession des opérations mécaniques suivante a lieu : échappement de ressort d'armement de la gorge où il s'était logé, libération et montée de l'axe de pivotement avec la pièce d'appui de blocage. En raison de la symétrie des gorges de came de la pièce d'armement, ces positions d'armement et de blocage existent symétriquement par rapport à un plan perpendiculaire médian.

On mentionne ici un avantage important dans l'efficacité du calage. En effet, on remarque que la pression de blocage en déplacement le long du profilé porteur 4 augmente avec l'amplitude angulaire de poussée sur le bras au-delà de la position de blocage. Ainsi, la poussée du véhicule sur sa cale augmente la force de coincement, c'est-à-dire le maintien de la cale en position, réalisant ainsi un autocoincement à sécurité positive.

On comprend bien que si sous l'action d'une accélération ou de secousses ou de vibrations, l'appui du bras pivotant se libère du pneu, même légèrement, la cale n'est plus correctement verrouillée. Si l'opérateur a suffisamment serré la cale contre le pneu, la souplesse de celui-ci peut être suffisante pour maintenir un effort de réaction sur le bras pivotant même dans le cas de légers mouvements du véhicule. Dans le cas contraire, on peut craindre la libération de la cale et donc un calage insuffisant du véhicule.

Selon la réalisation de perfectionnement, le bras pivotant 1 porte à coulissement une pièce réceptrice de calage 45 qui peut se positionner à un endroit quelconque entre l'extrémité libre en appui sur la structure porteuse par le patin 26 et un plot de butée 46 situé à proximité de l'extrémité portant l'axe de pivotement 2.

Cette pièce réceptrice de calage 45 pouvant se déplacer le long du bras remplit la fonction générale de curseur pour ne venir se positionner contre le pneu qu'après le rabattement du bras. Celui-ci peut ainsi passer sous les retours de carrosserie les plus bas des extrémités du véhicule à immobiliser par ses roues alors que la pièce réceptrice de calage 45 est dégagée vers l'extrémité articulée du bras pivotant. La pièce réceptrice de calage 45 peut ensuite être poussée du pied contre le pneu sans aucune interférence avec la carrosserie du véhicule.

Cette caractéristique apporte un avantage important dans la facilité de mise en oeuvre de la cale notamment sur les véhicules à carrosserie basse.

Cette pièce réceptrice de calage 45 peut affecter différentes formes.

Deux formes de base sont représentées sur les figures d'une part de 1 à 11 et d'autre part de 12 à 14.

La première est une forme tubulaire à deux anneaux 47 et 48 montés sur le tube constituant le bras pivotant 1. Ces anneaux 47 et 48 ont dans le cas de la réalisation représentée, une section d'ouverture carrée et sont réunis en partie supérieure par deux branches symétriques jumelées jointives 49 et 50 sur la majorité du périmètre en cadre 51, avec pour chacune un décrochement 52 et 53 en boucle saillante dans le coin situé du côté de la pédale 28. Chaque boucle saillante 52 et 53 constitue une butée de contact avec le flanc du pneu à caler. La forme en boucle de cette variante tubulaire ne présente aucun contour agressif pour les pieds ou chevilles de l'opérateur, ou les flancs de pneu lors du chargement, surtout lorsque le bras se trouve en position escamotée rabattue de repos contre le profilé porteur 4 de bordure.

Les anneaux 47 et 48 se trouvent reliés en partie inférieure par un ressort à lame 54 permettant d'immobiliser la pièce réceptrice de calage 45 dans une position précise de calage le long du bras pivotant correspondant à l'endroit du pneu à caler. A cet effet, le bombé de la lame porte sur le flanc inférieur du profilé constituant le bras pivotant.

Comme on le voit sur les figures 10 et 11, ce ressort à lame 54 permet de constituer une contrainte élastique agissant comme amortisseur et limiteur lors du basculement de la pièce réceptrice de calage 45 sous l'effet de la poussée du pneu. Cette butée élastique produit un effort de rappel vers la position verticale de la fig 9. Ce basculement se réalise autour de l'élément tubulaire à section carrée du bras pivotant 1. La pièce réceptrice de calage, en appui sur le pneu comme dans les figures 10 ou 11, produit un effort sur le bras pivotant qui induit un couple supplémentaire de blocage augmentant la force d'appui de la pièce 36 contre la face interne du profilé 4 de bordure.

Ainsi, si le pneu a tendance à bouger lors du transport, par exemple à passer de la position qu'il occupe sur la figure 11 à celle de la figure 10, le bras pivotant reste chargé et ainsi le pincement de blocage sur le profilé reste assuré.

Le ressort 54 a plusieurs fonctions, d'une part, il immobilise en translation la pièce réceptrice de calage sur le bras pivotant en position de calage, et créé d'autre part un effort supplémentaire d'appui de blocage de la cale sur son profilé porteur.

L'autre variante de réalisation représentée sur les figures 12 à 14 se présente sous la forme d'un bloc 55 monté déplaçable en translation le long du bras pivotant 1.

Ce bloc 55 se présente sous la forme générale d'une poignée se déplaçant le long du bras à la manière d'un coulisseau. Il comporte également des moyens élastiques pour son immobilisation et deux extensions ou oreilles latérales 56 et 57 servant chacune de joue de contact latéral avec le flanc du pneu à caler.

Afin de faciliter le travail de l'opérateur une pièce double de poussée 58 sous la forme de deux rampes obliques 59 et 60 en marches d'escalier, (non représentée sur les figures de 12 à 14), permet de pousser l'ensemble le long du profilé porteur de bordure 4 à l'aide du pied. Il suffit à l'opérateur d'appuyer son pied par la semelle d'une de ses chaussures sur une des rampes obliques 59 ou 60 en marches d'escalier correspondante.

A partir d'une position verrouillée de repos dans laquelle se trouve la cale, rabattue contre le profilé porteur de bordure, l'opérateur approche le bras pivotant en poussant sur la rampe en escalier de la pièce de poussée, vers le pneu du véhicule à caler. Puis, l'opérateur déverrouille la cale par appui sur la pédale 28. Il pivote ensuite le bras pivotant, la pièce réceptrice de calage 45 étant toujours en position dégagée. Ce bras pivotant peut débattre aisément sous le véhicule et les retours de carrosserie les plus bas, puisque la pièce réceptrice de calage 45 se trouve en dehors de la zone de manoeuvre. L'opérateur l'amène ensuite par coulissement en la poussant au pied en léger appui sur le pneu. La pédale est remontée, puisque lors du pivotement, le ressort de réarmement s'est libéré. Toujours au pied, l'opérateur pousse la pièce réceptrice de calage 45 devant le pneu jusqu'à mettre en contact les saillies ou les oreilles sur le flanc du pneu.

Il pousse ensuite toujours au pied et sur la rampe en escalier correspondante, la cale jusque dans sa position de coincement légèrement en biais.

La cale est alors verrouillée.

Comme on peut le voir sur les figures, l'immobilisation résulte de l'appui en pression de la surface de contact de la pièce mobile d'appui et de blocage 36 contre la face plane en regard du profilé 4 de bordure. Cet appui en pression est provoqué par le faible déplacement angulaire du bras par rapport à une position sensiblement perpendiculaire au profilé 4 de bordure.

Cet effet est augmenté par le mouvement de basculement de la pièce de calage sur laquelle appuie le pneu.

Le basculement élastique de la pièce réceptrice de calage 45 provoque par réaction, un couple sur le bras pivotant 1 de la cale et ainsi un supplément de force d'appui d'immobilisation.

La cale est ainsi mieux immobilisée dans tous les cas de délestage provenant des phases de freinage ou d'accélération, ou plus généralement, de la dynamique de la structure porteuse.

De façon plus précise, en fonctionnement, comme il apparaît sur les figures 9 à 11, le ressort à lame 55 appuie sur le chant inférieur du profilé à section carrée du bras pivotant 1.

Cette compression provient de l'espace disponible devenant de plus en plus faible entre la lame 54 et le chant inférieur du profilé du bras pivotant 1 au fur et à mesure que la lame 54 s'approche de l'arête adjacente du profilé à section carrée du bras pivotant 1.

Cet effet de résistance élastique provoque une force de rappel sur le pneu qui engendre par réaction un couple sur l'axe de pivotement venant augmenter le couple de blocage.

Ce couple supplémentaire existe toujours pendant le transport, mais varie en fonction des mouvements de débattement du véhicule sur sa structure porteuse.

L'immobilisation et son maintien pendant tout le transport sont alors toujours garantis évitant ainsi tout relâchement du coincement qui provient des sollicitations dues au mouvement du pneu en contact avec la cale suite aux déplacements du véhicule transporté.

## Revendications

1. Cale déplaçable en translation le long d'un profilé porteur longitudinal (4) d'une structure porteuse d'une unité de transport routier, ferroviaire ou maritime, d'au moins un véhicule routier, cale formée d'un bras pivotant (1) rabattable contre ce profilé longitudinal porteur (4) et venant occuper par pivotement puis verrouillage une position de calage sensiblement perpendiculaire au profilé longitudinal (4), **caractérisée en ce que** le bras pivotant (1) porte une pièce réceptrice de calage (45) montée déplaçable le long de celui-ci et montée basculante par rapport à celui-ci à travers un moyen qui procure un couple supplémentaire d'immobilisation du bras pivotant le long du profilé longitudinal porteur (4), **en ce que** la pièce réceptrice de calage (45) est un bloc mécanique (55) monté déplaçable par coulissement le long du bras pivotant (1) avec contrainte élastique d'immobilisation dans une position de calage, et **en ce que** le bloc mécanique (55) comporte un moyen engendrant un couple supplémentaire d'immobilisation du bras pivotant (1).

2. Cale selon la revendication précédente **caractérisée en ce que** le moyen procurant un couple supplémentaire d'immobilisation du bras pivotant (1) le long du profilé longitudinal porteur (4) est un moyen élastique.

3. Cale selon la revendication 1 ou 2 **caractérisée en ce que** la pièce réceptrice de calage (45) présente une base formée de deux anneaux (47) et (48) s'enfilant sur le bras pivotant (1) reliés entre eux par un moyen à force élastique pour son immobilisation dans une position de calage le long du bras pivotant (1) et **en ce que** les anneaux (47) et (48) sont reliés entre eux en partie supérieure par une structure en cadre (51).

4. Cale selon la revendication 3 **caractérisée en ce que** les anneaux (47) et (48) sont reliés entre eux par un moyen élastique qui immobilise la pièce réceptrice de calage (45) en position sur le bras pivotant (1) et créé une contrainte élastique de basculement.

5. Cale selon la revendication 3 ou 4 **caractérisée en ce que** le périmètre des anneaux (47) et (48) est carré ou rectangulaire et le bras pivotant (1) est tubulaire selon le même type de forme de section.

6. Cale selon la revendication 4 **caractérisée en ce que** le moyen à force élastique est un ressort à lame (54).

7. Cale selon la revendication 3 **caractérisée en ce que** la structure en cadre (51) est double et symétrique permettant d'assurer la fonction de calage des deux côtés.

8. Cale selon la revendication précédente **caractérisée en ce que** la structure en cadre (51) présente une boucle latérale en saillie (52) et (53) de chaque côté utilisée comme butée contre le flanc du pneu.

9. Cale selon la revendication 1 ou 2 **caractérisée en ce que** le bloc mécanique (55) présente en extrémité des prolongations latérales symétriques (56) et (57) servant de butée contre le flanc latéral du pneu.

## Patentansprüche

1. Keil, der in Translation entlang eines länglichen Trägerprofils (4) einer Trägerstruktur einer Straßen-, Eisenbahn- oder See-Transporteinheit wenigstens eines Straßenfahrzeugs verschiebbar ist, wobei der Keil eines Schwenkarms (1) klappbar gegen dieses längliche Trägerprofil (4) geformt ist und per Schwenken und dann per Verriegelung eine Verkeilungsposition einnimmt, die deutlich lotrecht zum Längsprofil (4) ist, **dadurch gekennzeichnet, dass** der Schwenkarm (1) ein Aufnahmeteil der Verkeilung (45) trägt, das verschiebbar entlang desselben montiert ist und kippend im Verhältnis zu demselben durch ein Mittel montiert ist, das ein zusätzliches Feststellelement des Schwenkarms entlang des länglichen Trägerprofils (4) bereitstellt, dass das Aufnahmeteil der Verkeilung (45) ein mechanischer Block (55) ist, der verschiebbar per Gleiten entlang des Schwenkarms (1) mit elastischer Feststellspannung in einer Verkeilungsposition montiert ist und dass der mechanische Block (55) ein Mittel umfasst, das ein zusätzliches Feststellelement des Schwenkarms (1) erzeugt.

2. Keil gemäß dem voranstehenden Anspruch, **dadurch gekennzeichnet, dass** das Mittel, das ein zusätzliches Feststellelement des Schwenkarms (1) entlang des länglichen Trägerprofils (4) ein elastisches Mittel ist.

3. Keil gemäß Anspruch 1 oder 2, **dadurch gekennzeichnet, dass** das Verkeilungsaufnahmeteil (45) eine Basis aufweist, die aus zwei Ringen (47) und (48) geformt ist, die sich auf dem Schwenkarm (1) aneinanderreihen, miteinander durch ein Mittel mit elastischer Kraft für seine Feststellung in einer Verkeilungsposition entlang des Schwenkarms (1) verbunden sind und dass die Ringe (47) und (48) miteinander im oberen Teil durch eine Rahmenstruktur (51) verbunden sind.

4. Keil gemäß Anspruch 3, **dadurch gekennzeichnet, dass** die Ringe (47) und (48) miteinander durch ein elastisches Mittel verbunden sind, das dem Aufnahmeteil der Verkeilung (45) in Position auf dem Schwenkarm (1) feststellt und eine elastische Kippspannung schafft.

5. Keil gemäß Anspruch 3 oder 4, **dadurch gekennzeichnet, dass** der Perimeter der Ringe (47) und (48) quadratisch oder rechteckig ist und der Schwenkarm (1) röhrenförmig gemäß demselben Typ der Querschnittsform ist.

6. Keil gemäß Anspruch 4, **dadurch gekennzeichnet, dass** das Mittel mit elastischer Kraft eine Blattfeder (54) ist.

7. Keil gemäß Anspruch 3, **dadurch gekennzeichnet, dass** die Rahmenstruktur (51) doppelt und symmetrisch ist und die Gewährleistung der Verkeilungsfunktion der zwei Seiten zulässt.

8. Keil gemäß dem voranstehenden Anspruch, **dadurch gekennzeichnet, dass** die Rahmenstruktur (51) eine laterale hervorstehende Schleife (52) und (53) auf jeder Seite aufweist, die als Anschlag gegen die Seite des Reifens verwendet wird.

9. Keil gemäß Anspruch 1 oder 2, **dadurch gekennzeichnet, dass** der mechanische Block (55) am Ende symmetrische laterale Verlängerungen (56) und (57) aufweist, die als Anschlag gegen die laterale Flanke des Reifens dienen.

## Claims

1. Chock movable in a translational movement along a longitudinal bearing profile (4) of a bearing structure of a road, rail or maritime transportation unit, for at least one road vehicle, the which chock is composed of a pivoting arm (1) that can be folded back against this bearing longitudinal profile (4), and able to enter, by pivoting and then locking, a chocking position that is essentially perpendicular to the longitudinal profile (4), **characterized in that** the pivoting arm (1) bears a chocking receiving piece (45) mounted such as to be movable along the aforesaid arm and mounted able to rock about it, through a means that provides a supplementary torque for the immobilization of the pivoting arm along the bearing longitudinal profile bar (4), **in that** the chocking receiving piece (45) is a mechanical block (55) mounted such as to be movable by sliding along the pivoting arm (1) with elastic stress of immobilization in a chocking position, and **in that** the mechanical block (55) comprises a means of applying an additional torque for the immobilization of the pivoting arm (1).

2. Chock according to the preceding claim, **characterized in that** the means providing a supplementary torque for the immobilization of the pivoting arm (1) along the bearing longitudinal profile (4) is an elastic means.

3. Chock according to claim 1 or claim 2, **characterized in that** the chocking receiving piece (45) has a base formed by two rings (47) and (48) that are threaded onto the pivoting arm (1) interconnected with each other by a means of generating elastic force for its immobilization in a chocking position along the pivoting arm (1), and **in that** the rings (47) and (48) are interconnected with each other at the top by a framework structure (51).

4. Chock according to claim 3, **characterized in that** the rings (47) and (48) are interconnected with each other by an elastic means that immobilizes the chocking receiving piece (45) in position on the pivoting arm (1) and creates a rocking elastic stress.

5. Chock according to claim 3 or claim 4, **characterized in that** the perimeter of the rings (47) and (48) is square or rectangular, and the pivoting arm (1) is tubular with the same type of cross-section shape.

6. Chock according to claim 4, **characterized in that** the means of generating elastic force is a leaf spring (54).

7. Chock according to claim 3, **characterized in that** the framework structure (51) is dual and symmetrical, and able to perform the chocking function on both sides.

8. Chock according to the preceding claim, **characterized in that** the framework structure (51) has a protruding lateral loop (52) and (53) on each side used as an abutment against the sidewall of the tire.

9. Chock according to claim 1 or claim 2, **characterized in that** the mechanical block (55) has, at the ends, symmetrical lateral projections (56) and (57) serving as an abutment against the sidewall of the tire.
